(19) Europäisches Patentamt

European Patent Office

Office européen des brevets

(11) EP 1 220 472 A1

(12) EUROPEAN PATENT APPLICATION

(43) Date of publication:
03.07.2002 Bulletin 2002/27

(51) Int Cl.7: H04B 7/005

(21) Application number: 01660250.0

(22) Date of filing: 21.12.2001

(84) Designated Contracting States:
AT BE CH CY DE DK ES FI FR GB GR IE IT LI LU MC NL PT SE TR
Designated Extension States:
AL LT LV MK RO SI

(30) Priority: 27.12.2000 FI 20002857

(71) Applicant: Nokia Corporation
02150 Espoo (FI)

(72) Inventor: Hottinen, Ari
02320 Espoo (FI)

(74) Representative: Brockman, Pertti Erik
Kolster Oy Ab,
P.O. Box 148,
Iso Roobertinkatu 23
00121 Helsinki (FI)

(54) Method and arrangement for implementing power control

(57) A method for implementing power control on a connection between two transceivers (202, 208), the method comprising the steps of receiving frame-structured signal sent from the first transceiver (202) using the second transceiver (208), decoding the received signal in a decoder (316) of the second transceiver, the decoder providing an estimate concerning the reliability of the signal in the output thereof, comparing the estimated reliability or the parameter modelling the reliability to a particular given threshold value, adjusting the transmission power of the first transceiver in the second transceiver by signalling power control information to the first transceiver so that the estimated reliability is as close as possible to the given reliability. The solution of the invention calculates the power control information on the basis of the estimated reliability.

Fig. 3

EP 1 220 472 A1

Printed by Jouve, 75001 PARIS (FR)

## Description

FIELD OF THE INVENTION

The invention relates to an arrangement and a method for implementing power control. In particular, the invention can be applied to CDMA radio systems in uplink and downlink power control.

BACKGROUND OF THE INVENTION

In radiotelephone environments it is typical that the propagation conditions continuously change. Constant variation, or fading, occurs in a signal received both in a subscriber terminal and a base station. Two different types of phenomena can be distinguished in signal fading. The fading may either be slow or fast and generally both phenomena occur simultaneously.

Fast signal fading is caused by multipath propagation typical for a cellular radio environment, where the signal propagates along several paths between a transmitter and a receiver. Signal components arriving at the receiver along different paths are summed in the receiver, and depending on the phase difference between the signal components they either amplify or attenuate one another. The signal power level may vary significantly, up to dozens of decibels, already at a distance less than half a wavelength.

Slow signal fading is in turn caused by a varying amount of factors causing additional attenuation on the radio path, such as obstacles in the terrain or buildings. The slow signal fading on a signal is, as the term indicates, variation that has a somewhat slower effect on the signal strength than the fast fading that causes powerful power variation around the envelope caused by the slow fading.

Owing to the continuous variation of the above received signal strength, the transmission power used by the subscriber terminal and the base station are continuously observed and should be adjusted to be appropriate at each moment of time. Power control aims to keep the transmission power of the apparatus as low as possible, however, without compromising about the connection quality, so that the signal does not interfere with other connections and so that the power consumption of a portable terminal in particular remains low.

In several prior art solutions the power control systems are divided into two parts, what are known as an open loop adjustment and a closed loop adjustment. In the open loop adjustment the terminal adjusts the power thereof on the basis of the power of the signal received from the base station. In the closed loop adjustment the base station sends power control commands to the terminal (increase or reduce transmission power) and bases the commands on the quality of the sent signal, particularly on the signal-to-interference-ratio (SIR).

The closed loop adjustment can further be divided into two parts: an inner and an outer loop. In the inner loop, a base station measures the signal-to-interference ratio from the signal received from the terminal, compares the signal-to-interference ratio with the set threshold value SIR and sends power control commands to the terminal in order to decrease the difference between the signal SIR and the threshold value.

In the outer loop the threshold value is adjusted according to the channel parameters. The outer loop adjustment is frequently slower than the adjustment of the inner loop.

In prior art methods the adjustment of the threshold value SIR is most frequently based on calculating the bit error rate (BER) or the frame error rate (FER) that is carried out using CRC coding in the frames. This creates a problem especially when the transfer requires a low bit error rate, as for example in data transmission where the BER may have the value $10^{-6}$ or $10^{-9}$. Thus, the corresponding FER is also low. In such a case, it is very difficult to measure a reliable BER or FER value from a received signal and simultaneously to accurately control the threshold value SIR. When conventional methods are used, a reliable measurement lasts particularly long. For example, a reliable FER measurement may take up to 400 s on a 32 kbit/s transmission rate when the frame length is 80 ms. In practical applications such a time is far too long. In addition, when a CRC error occurs, the threshold value may rise too high, whereby the transmission power becomes unnecessarily high, and uses system capacity, thus causing unreasonable interference to other cells in the same cell or neighbouring cells.

A prior art method is disclosed in publication A. Sampath, P. Kumar, J.M. Holtzman, "On setting reverse link target SIR in a CDMA system", Proc IEEE VTC '97, pages 929 to 933. Here the threshold value is adjusted using a fixed-sized adjustment step as described above. CRC coding is used to clarify whether the received frame is incorrect, and if not, then the threshold value is changed using the step Δ provided. If the frame is incorrect, then the threshold value is changed in the other direction using step K*Δ, where K is the integer that exceeds or equals 1.

The drawback in the prior art solutions is that the adjustment slowly adapts to the changing channel. The adjustment cannot keep up with the rapidly changing channel.

BRIEF DESCRIPTION OF THE INVENTION

It is an object of the invention to provide a method and an apparatus implementing the method so as to implement fast and efficient power control. This is achieved with a method for implementing power control on a connection between two transceivers, the method comprising the steps of receiving frame-structured signal sent from the first transceiver using the second transceiver, decoding the received signal in a decoder of the second transceiver, the decoder providing an estimate concerning the reliability of the signal in the output thereof, comparing the estimated reliability or the parameter modelling the reliability to a particular given threshold value, adjusting the transmission power of the first transceiver in the second transceiver by signalling power control information to the first transceiver so that the estimated reliability is as close as possible to the given reliability. The method of the invention calculates the power control information on the basis of the estimated reliability.

The invention also relates to a method for implementing power control on a connection between two transceivers, the method comprising the steps of receiving frame-structured signal sent from the first transceiver using the second transceiver, decoding the received signal in a decoder of the second transceiver, the decoder providing an estimate concerning the reliability of the signal in the output thereof, comparing the estimated reliability or the parameter modelling the reliability to a particular given threshold value, adjusting the transmission power of the first transceiver in the second transceiver by signalling power control information to the first transceiver so that the estimated reliability is as close as possible to the given reliability. The method of the invention generates an estimate of at least one reliability measure distribution using the reliability measures of several received frames and calculates the power control information on the basis of the estimated reliability.

The invention also relates to an arrangement for implementing power control on a connection between two transceivers, the arrangement comprising in the second transceiver means for receiving frame-structured signal sent from the first transceiver, means for decoding the received signal, the means being arranged to provide an estimate concerning the reliability of the signal in the output thereof, means for comparing the estimated reliability or the parameter modelling the reliability to a particular given threshold value, means for adjusting the transmission power of the first transceiver by forming and signalling power control information to the first transceiver so that the estimated reliability is as close as possible to the given reliability, means for adjusting the given threshold value in order to optimise signal quality. In the arrangement of the invention the second transceiver further comprises means for calculating the power control information on the basis of the estimated reliability.

The invention further relates to an arrangement for implementing power control on a connection between two transceivers, the arrangement comprising in the second transceiver means for receiving frame-structured signal sent from the first transceiver, means for decoding the received signal, the means being arranged to provide an estimate concerning the reliability of the signal in the output thereof, means for comparing the estimated reliability or the parameter modelling the reliability to a particular given threshold value, means for adjusting the transmission power of the first transceiver by forming and signalling power control information to the first transceiver so that the estimated reliability is as close as possible to the given reliability. In the arrangement of the invention, the second transceiver further comprises means for generating an estimate of at least one reliability measure distribution using the reliability measures of several received frames and means for calculating the power control information on the basis of the estimated reliability.

The invention is based on the idea that the function of steplike power control is controlled on the basis of the reliability information, particularly the error correction, obtained from the channel decoder. In a preferred embodiment of the invention the threshold value controlled by an outer loop is adjusted in a steplike manner by changing the size of the step using the reliability information as the basis. In another preferred embodiment of the invention the step size of the power control is adjusted on the basis of the reliability information.

The method and arrangement of the invention provide several advantages. The adjustment of the solution is fast and can be well adapted to the channel coding and to changes taking place on the channel.

BRIEF DESCRIPTION OF THE DRAWINGS

In the following, the invention will be described in greater detail by means of the preferred embodiments with reference to the attached drawings, in which

Figure 1 is an example showing a system according to a preferred embodiment of the invention,
Figure 2 is another example showing a system according to a preferred embodiment of the invention, and
Figure 3 is an example showing the structure of a first and a second transceiver.

## DESCRIPTION OF THE PREFERRED EMBODIMENTS

The preferred embodiments of the invention can be applied to telecommunication systems employing spread-spectrum data transmission. An example of such a telecommunication system is the broadband CDMA/WCDMA radio system. In the following example, the preferred embodiments of the invention are described in a universal mobile phone system using a broadband code division multiple access method, however, without restricting the invention thereto.

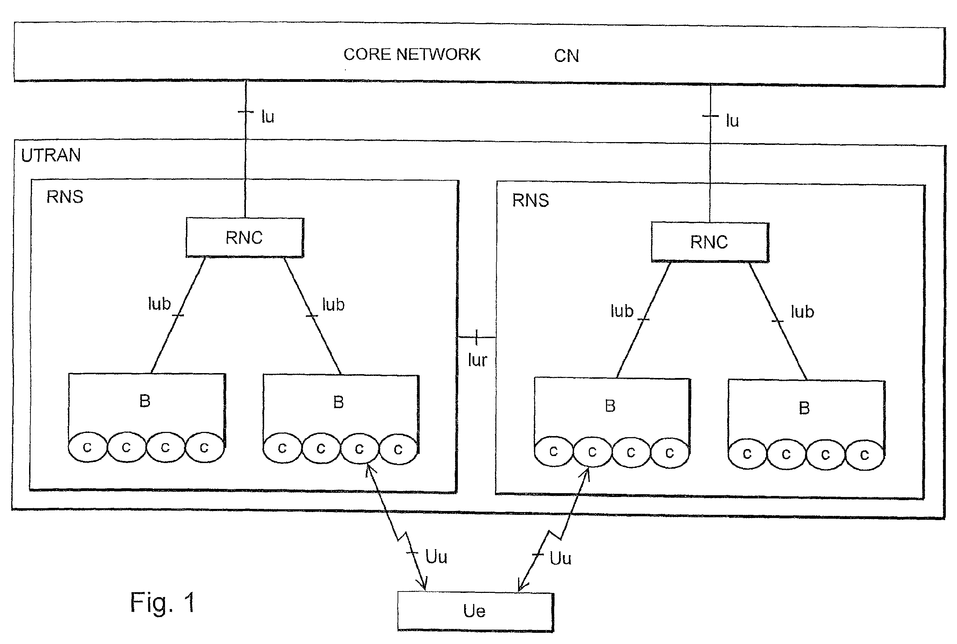

With reference to Figure 1, the structure of a mobile phone system is explained by way of example. The main parts of a mobile phone system are a core network CN, a UMTS terrestrial radio access network UTRAN and user equipment UE. The interface between the CN and the UTRAN is referred to as Iu and the air interface between the UTRAN and the UE is referred to as Uu.

The UTRAN is formed of radio network subsystems RNS. The interface between the RNSs is referred to as Iur. The RNS is formed of radio network controllers RNC and of one or more nodes B. The interface between the RNC and the B is referred to as Iub. The coverage area of the node B, or the cell, is referred to as C in the Figure.

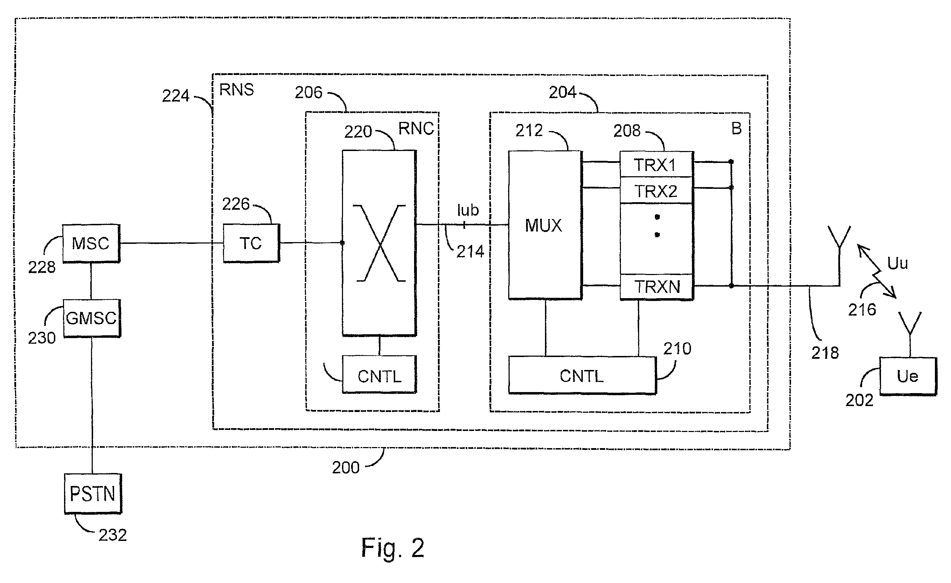

The description shown in Figure 1 is a fairly general one, and it is therefore clarified in Figure 2 by a more detailed example of a cellular radio system. Figure 2 only comprises the most essential blocks, but it is apparent for those skilled in the art that a conventional cellular radio network also includes other functions and structures that need not be explained in greater detail in this context. It should further be noted that Figure 2 only illustrates an exemplary structure. The details of the systems according to the invention may differ from those shown in Figure 2, but these differences are not relevant to the invention.

Thus, a cellular radio network typically comprises a fixed network infrastructure, or a network part 200, and subscriber terminals 202, which may be fixedly mounted, vehicle-mounted or portable hand-held terminals. The network part 200 comprises base stations 204. A base station corresponds to node B in the previous Figure. A radio network controller 206 that communicates with several base stations 204 in a centralized manner, in turn, controls said base stations. The base station 204 comprises transceivers 208 and a multiplexer unit 212.

The base station 204 further comprises a control unit 210 for controlling the operations of the transceivers 208 and of the multiplexer 212. The multiplexer 212 is used to place the traffic and control channels used by several transceivers 208 on one transmission link 214. The transmission link 214 forms the interface Iub.

There is a connection from the transceivers 208 of the base station 204 to an antenna unit 218, which implements a bi-directional radio link 216 to the user equipment 202. The structure of frames transferred on the bi-directional radio link 216 is defined system-specifically and referred to as air interface Uu.

The radio network controller 206 comprises a group switching field 220 and a control unit 222. The group switching field 220 is used for switching speech and data and for connecting signalling circuits. A radio network subsystem 224 formed of the base station 204 and the radio network controller 206 also comprises a transcoder 226. The transcoder 226 is usually located as close as possible to a mobile switching centre 228, since this allows speech to be transferred in cellular radio network form between the transcoder 226 and the radio network controller 206, thus saving transfer capacity.

The transcoder 226 converts the different digital speech encoding forms used between a public telephone network and a radio telephone network so as to suit one another, for example from the fixed network form to another cellular radio network form or vice versa. The control unit 222 carries out call control, mobility management, gathering of statistics, and signalling.

Figure 2 also shows the mobile switching centre 228 and a port mobile switching centre 230, which handles the connections of the mobile telephone system to the outside world, here to a public telephone network 232.

The solution according to the preferred embodiments of the invention is particularly applicable to base station and terminal receivers, and more generally also to the communication between any two transceivers. This description mainly describes such an implementation alternative, where the base station in the cellular radio system adjusts the power of the terminal communicating therewith, i.e. an alternative, where the first transceiver is a terminal and the second transceiver is a base station transceiver.

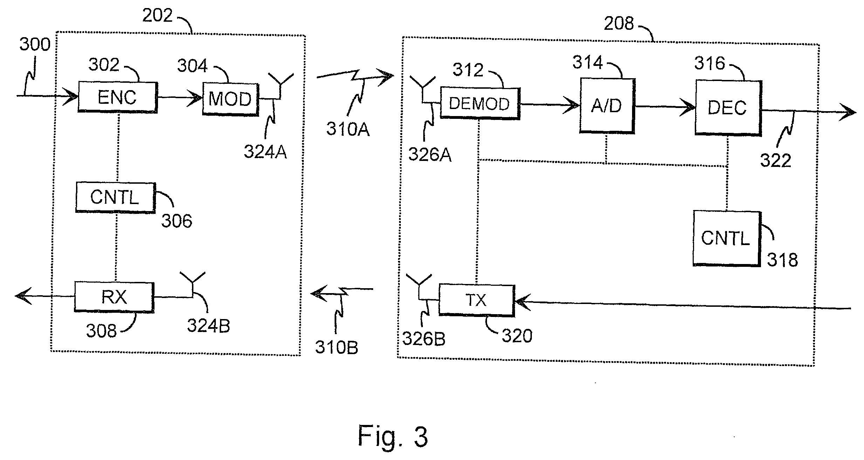

Let us next take a closer look at an example showing the structure of the first and the second transceivers shown in Figure 3. The Figure illustrates the parts, which are essential to the invention of the transceivers. The transceivers naturally comprise many other blocks than those shown in the Figure, as is apparent to those skilled in the art, but which are not relevant in this context.

In this example, the first transceiver 202 is a terminal. The apparatus comprises a channel coder 302, where a desired channel coding is conducted for a signal 300, which may be speech or other data. The channel-coded signal is applied to a modulator, where the signal is modulated to a desired carrier, amplified and sent to a radio path 310A through an antenna 324A. The required measures are carried out in the modulator including burst formation, frame structure composition, multiplication by spreading code and other measures depending on the system, which are not described herein, as they are irrelevant for the invention. The apparatus further comprises control means 306, which are typically implemented by means of a processor and/or using discrete components and appropriate software. The control means 306 control the function of the different apparatus parts. The apparatus also comprises reception means 308 for receiving signal on a radio path 310B using an antenna 324B. The means carry out signal demodulation and decoding using prior art methods. Here, the radio path is described in two different parts 310A and 310B, which practically are the transmission paths of the radio path in different directions (the uplink and downlink direction). Furthermore, a practical terminal generally comprises only one antenna, even though this example describes two antennas 324A and 324B, for the sake of clarity.

The second transceiver 208 receives a signal from the first transceiver using an antenna 326A and applies the signal to a demodulator 312, where the signal is demodulated and typically converted to an intermediate frequency or to baseband. Thus, the converted signal is changed into digital mode in an analogue/digital converter 314, and is further applied to a decoder 316, where channel decoding is conducted. A decoded signal 322 is applied to the other parts of the receiver. The second transceiver also comprises control means 318, which control the function of the different apparatus parts. The transceiver also comprises transmission means 320 that send desired signal using an antenna 326B onto the radio path 310B and to the first transceiver 202.

The second transceiver according to the preferred embodiments of the invention employs a decoder, which while decoding the received signal also calculates estimates concerning the a posteriori probabilities in the symbols or bits included in the signal. Often, particularly in wireless data transmission systems, efficient channel coding methods are used, such as turbo coding. Several methods are created for decoding turbo coding, wherein for example MAP (Maximum A Posteriori) is applied in different forms. For example, probability calculations required in the preferred embodiments of the invention are calculated in these methods.

A solution according to some preferred embodiments of the invention utilizes the calculation of a coded bit error rate, which is carried out in connection with the decoding or on the basis of the information provided by the decoding. A blind estimate for a coded BER is obtained from the soft decision statistics in the output of the channel decoder 312:

$$P_e = E\left[(1-p_1)1_{p1>\frac{1}{2}}(p_1) + p_1 1_{p1<\frac{1}{2}}(p_1)\right], \tag{1}$$

where $1_{P1>\frac{1}{2}} = 1$, if $p_1 > \frac{1}{2}$ ja $1_{P1>\frac{1}{2}} = 0$, otherwise
$p_1 = \Pr(b = 1|\mathbf{r})$, a posteriori probability for the coded symbol or for a sent bit.

A sample estimate for a coded BER using a frame, whose size is N, is obtained for instance from the formula:

$$\hat{P}_e = 1/N \sum_{i}^{N}\left[(1-p_1(i))1_{p1(i)>\frac{1}{2}}(p_1(i)) + p_1(i)1_{p1(i)<\frac{1}{2}}(p_1(i))\right], \tag{2}$$

where it is assumed for the sake of clarity that the bit errors are independent of one another.

The BER estimate can be specified if known bits are utilized as follows:

$$\hat{BER} = 1/N \sum_{i}^{N}\left[(1-p_1(i))1_{b(i)>\frac{1}{2}}(b(i)) + p_1(i)1_{b(i)<\frac{1}{2}}(b(i))\right]. \tag{3}$$

The frame error estimate FER can in turn be calculated for example in the following way

$$\hat{FER} = 1/N \prod_{i=i}^{N}\left[p_1(i)1_{b(i)>\frac{1}{2}} + (1-p_1(i))1_{b(i)<\frac{1}{2}}(b(i))\right]. \tag{4}$$

Correspondingly a probability can be calculated that the frame includes a certain number of errors, or that certain bits are erroneous in the frame.

The aforementioned estimates can naturally also be combined, if the frame includes some known bits and some information bits. What is essential is that the probability estimates are utilized in one way or another for individual bits or bit sequences, such as frames.

The channel decoder may provide an estimate concerning the bit error rate of the signal or the frame error rate of the signal, even without using known bits or CRC code. The channel decoder may also provide the credibility metric of the signal, such as a set of log-likelihood values, which are associated with the previous probabilities: typically the log likelihood metric is comparable with the variable

$$\Lambda(b_i) = K \log((p_1(i)|r) / (p_{-1}(i)|r))$$

where K is a constant.

The reliability estimated in the solution according to a preferred embodiment of the invention or the different reliability estimates also allow determining a distribution for the reliability of the connection or a parameter distribution describing the reliability. What the distribution refers to in this context is for example the distribution of the above a posteriori likelihoods or log likelihood values that can be estimated parametrically or non-parametrically from the received log-likelihood values or probabilities. This takes place for instance parametrically so that the receiver calculates (either recursively or non-recursively by storing into the memory a set of reliability values either for individual bits or bit sequences) a histogram from a reliability measure, such as the bit error probabilities or metrics. Alternatively the distribution family (for example [mixture][log-] Normal distribution using average values mu1 and variance sigma1) can be separately determined for various codings and/or channels and a reliability estimate is obtained by estimating only the required parameters from the received reliability metrics. It should be noted that the distribution of the reliability metrics depends very much on the channel codes used and on the transmission path and on the statistical properties thereof.

In addition to the previous ones, the solution according to the preferred embodiments of the invention may utilize an evaluation provided by the CRC calculation for the frame error ratio. This method naturally leaves the aforementioned reliability information provided by the error correcting code totally unused.

In the solution according to a preferred embodiment of the invention the second transceiver preferably receives frame-structured signal from the first receiver and performs decoding in the decoder 312. Information on signal quality is obtained in accordance with the above formulas from the decoder. The information is applied to the control means 318 that controls the power control. Power control commands (increase or reduce transmission power) are formed in the control means to the first transceiver, basing the commands on the signal quality sent by the first transceiver, particularly on the BER/FER information or the distribution thereof. The power control commands are sent using the transmission means 320 to the first transceiver, which receives the commands using the reception means 308, from where the commands are transferred to the control means 306, which control the transmission power used in the modulator 304 on the basis of the commands.

In a solution according to a preferred embodiment, a comparison is formed in the control means of the second transceiver between the reliability parameter of the signal estimated from the received signal or the distribution of the reliability metrics/parameter and the given threshold parameter (for example $BER_{TH}$, $FER_{TH}$, $SIR_{TH}$) or the distribution thereof. The given threshold value must also be adjusted, since the propagation conditions of the signals and the coding methods in wireless data transmission vary. To change the threshold value is a simple way to affect the distribution of the reliability metrics. The effect typically varies on the different channel codes and on the different frame formation ways. It is possible in some cases to determine a set of different threshold values, in which case the control varies depending on the value of the received reliability metrics, and determining different threshold values may depend on the distribution of the reliability metrics. If, for instance the distribution is bimodal, so that the reliability is either very poor or very good, it is not necessarily preferable to increase the threshold so much that both parts of the distribution are reliable enough. Thus, it may be preferable not to increase the threshold value when a frame provided with poor reliability is concerned, otherwise the threshold value may rise too much and strain the system capacity excessively. Alternatively, the control may then be something else that changes the reliability distribution, for example by changing the coding ratio or changing a parameter of a coding. For example, a following situation may be created, if a Turbo code interleaver is poor for a given frame. The situation may be detected using a decoding metric distribution, and instead of increasing the transmission power the parameters of the interleaving can be changed, or the threshold should not be increased excessively.

In a solution according to another preferred embodiment, the step size of the power control is formed in the control means of the second transceiver using the reliability parameter of the signal estimated from the signal. This step size is signalled using the transmission means 320 to the first transceiver that receives the commands using the reception means 308.

Let us now take a closer look at an example concerning the adjustment of the threshold value using the BER/FER value as the basis. The threshold value can be adjusted in a steplike fashion as the following formula shows:

$$SIR_{TH} \leftarrow SIR_{TH} + Pr(FER>0)\Delta_1 - Pr(FER=0)\Delta_2, \qquad (5)$$

where FER is obtained using formula (4), possibly assisted by the CRC result. Alternatively, the estimation can be carried out (with or without the CRC):

$$SIR_{TH} \leftarrow SIR_{TH} + Pr( BER \geq BER_{target}) \Delta_1 - Pr(BER < BER_{target}) \Delta_2, \qquad (6)$$

where $\Delta_1 > 0$ or $\Delta_2 \geq 0$. According to the formulas the threshold value is adjusted in a steplike fashion so that the step size depends on the estimated BER/FER value and the desired BER value ($BER_{target}$). The $BER_{target}$ may be 0 or it may be larger than zero. In the latter case, the BER estimates can be used in such a manner that the BER/FER distribution is calculated. Now a threshold value can be searched for that optimizes, for example, a BER outage probability.

The solution provides such an advantage that when the BER/FER remains far from the desired one, then the step size increases. Consequently, the adjustment is rapidly converged to the desired value.

The reliability estimate, the variable describing the estimate or the distribution can also be applied to the adjustment of the power control step size using corresponding formulas. The information about a changed step size is sent to the first transceiver.

In a solution according to a preferable embodiment of the invention the step size can also be selected from a number of possible step sizes. The signalling of power control bits may occur using any known methods.

The signal to be sent in the solution according to a preferred embodiment of the invention is frame-structured. Different information is typically sent in consecutive frames. The solution can also be applied to arrangements, in which the same information is at least partly sent in the consecutive frames. An example of such a situation is when a frame that is unsuccessfully decoded in a receiver is transferred anew. A previously sent and at least partly unsuccessfully received frame and a retransmitted frame can be combined in the receiver. This is referred to as incremental redundancy. In the solution according to a preferred embodiment of the invention the combination of the reliability metrics of previous transmissions and retransmissions (for instance a sum) should be a desired one. For example, if a previous transmission fails almost entirely, and retransmission is required, then retransmission can be carried out using a lower power than if the first transmission would have failed totally.

Even though the invention has above been explained with reference to the example in the accompanying drawings, it is obvious that the invention is not restricted thereto but can be modified in various ways within the scope of the inventive idea disclosed in the attached claims.

**Claims**

1. A method for implementing power control on a connection between two transceivers (202, 208), the method comprising the steps of
   receiving frame-structured signal sent from the first transceiver (202) using the second transceiver (208),
   decoding the received signal in a decoder (316) of the second transceiver, the decoder providing an estimate concerning the reliability of the signal in the output thereof,
   comparing the estimated reliability or the parameter modelling the reliability to a particular given threshold value,
   adjusting the transmission power of the first transceiver in the second transceiver by signalling power control information to the first transceiver so that the estimated reliability is as close as possible to the given reliability,
   **characterized by**
   calculating the power control information on the basis of the estimated reliability.

2. A method for implementing power control on a connection between two transceivers (202, 208), the method comprising the steps of
   receiving frame-structured signal sent from the first transceiver (202) using the second transceiver (208),
   decoding the received signal in a decoder (316) of the second transceiver, the decoder providing an estimate concerning the reliability of the signal in the output thereof,
   comparing the estimated reliability or the parameter modelling the reliability to a particular given threshold value,
   adjusting the transmission power of the first transceiver in the second transceiver by signalling power control information to the first transceiver so that the estimated reliability is as close as possible to the given reliability, **characterized by**

generating an estimate of at least one reliability measure distribution using the reliability measures of several received frames, and

calculating the power control information on the basis of the estimated reliability.

3. A method as claimed in claim 1 or 2, **characterized in that** the given threshold value is adjusted in order to optimise signal quality in a steplike fashion so that the step size depends on the estimated reliability.

4. A method as claimed in claim 1 or 2, **characterized in that** the steplike power control commands are signalled to the first transceiver so that the step size depends on the estimated reliability.

5. A method as claimed in claim 1 or 2, **characterized in that** the desired transmission power is signalled in such a manner that the power depends on the estimated reliability.

6. A method as claimed in claim 1 or 2, **characterized in that** an estimate concerning the bit error rate of the signal is obtained from the decoder.

7. A method as claimed in claim 1 or 2, **characterized in that** an estimate concerning the bit error rate of the frame bits is obtained from the decoder.

8. A method as claimed in claim 1 or 2, **characterized in that** an estimate concerning the frame error rate of the signal is obtained from the decoder.

9. A method as claimed in claim 1 or 2, **characterized in that** signal credibility metric is obtained from the decoder.

10. A method as claimed in claim 3 or 4, **characterized in that** the step size depends on the estimated reliability and on the reliability requirement set on the connection.

11. A method as claimed in claim 3 or 4, **characterized in that** the step size is selected from a set of possible step sizes.

12. A method as claimed in claim 1, **characterized in that** the probability of the correct frames is estimated for the received signal on the basis of the output signal of the decoder and that the power control is controlled on the basis of the estimated probability.

13. A method as claimed in claim 1 or 2, **characterized in that** the soft decisions provided by the decoder are utilized when calculating the reliability.

14. A method as claimed in claim 1 or 2, **characterized in that** the values obtained in CRC calculation are used together with the reliability values in connection with the adjustment.

15. A method as claimed in claim 1 or 2, **characterized in that** the reliability estimates enable to search for a step size that optimises the BER outage probability.

16. A method as claimed in claim 1 or 2, **characterized in that** the information to be sent in consecutive frames is at least partly similar.

17. A method as claimed in claim 16, **characterized in that** the combination of the reliability metrics of consecutive frames should be kept at a desired level.

18. A method as claimed in claim 2, **characterized in that** at least two reliability metric distributions are calculated, where different distributions correspond with different signal statistics at the input of the decoder.

19. A method as claimed in claim 2, **characterized in that** a non-parametric estimator is used for generating a reliability measure distribution.

20. A method as claimed in claim 2, **characterized in that** a parametric estimator is used for generating a reliability measure distribution.

21. A method as claimed in claim 1 or 2, **characterized in that** the reliability estimate depends on the a posteriori probabilities or likelihood values of the information bits obtained from the output of the decoder.

22. An arrangement for implementing power control on a connection between two transceivers (202, 208), the arrangement comprising in the second transceiver (208)

means (312) for receiving frame-structured signal sent from the first transceiver,

means (316) for decoding the received signal, the means being arranged to provide an estimate concerning the reliability of the signal in the output thereof,

means (318) for comparing the estimated reliability or the parameter modelling the reliability to a particular given threshold value,

means (318, 320) for adjusting the transmission power of the first transceiver by forming and signalling power control information to the first transceiver so that the estimated reliability is as close as possible to the given reliability,

means (318, 320) for adjusting the given threshold value in order to optimise signal quality, **characterized in that** the arrangement further comprises in the second transceiver

means (318) for calculating the power control information on the basis of the estimated reliability.

23. An arrangement for implementing power control on a connection between two transceivers (202, 208), the arrangement comprising in the second transceiver (208)

means (312) for receiving frame-structured signal sent from the first transceiver,

means (316) for decoding the received signal, the means being arranged to provide an estimate concerning the reliability of the signal in the output thereof,

means (318) for comparing the estimated reliability or the parameter modelling the reliability to a particular given threshold value,

means (318, 320) for adjusting the transmission power of the first transceiver by forming and signalling power control information to the first transceiver so that the estimated reliability is as close as possible to the given reliability, **characterized in that** the arrangement further comprises in the second transceiver

means (318) for generating an estimate of at least one reliability measure distribution using the reliability measures of several received frames, and

means for calculating the power control information on the basis of the estimated reliability.

24. An arrangement as claimed in claim 22 or 23, **characterized in that** the means (318) adjust the given threshold value in order to optimise in a steplike fashion so that the step size depends on the estimated reliability.

25. An arrangement as claimed in claim 22 or 23, **characterized in that** the means (318, 320) signal steplike power control commands to the first transceiver so that the step size depends on the estimated reliability.

26. An arrangement as claimed in claim 22 or 23, **characterized in that** the means (318, 320) signal the desired power control so that the power depends on the estimated reliability.

27. An arrangement as claimed in claim 22 or 23, **characterized in that** the output of the decoding means (316) comprise an estimate concerning the bit error rate of the frame bits.

28. An arrangement as claimed in claim 22 or 23, **characterized in that** the output of the decoding means (316) comprise an estimate concerning the bit error rate of the signal.

29. An arrangement as claimed in claim 22 or 23, **characterized in that** the output of the decoding means (316) comprise an estimate concerning the frame error rate of the signal.

30. An arrangement as claimed in claim 22 or 23, **characterized in that** the output of the decoding means (316) comprise signal credibility metric.

31. An arrangement as claimed in claim 24 or 25, **characterized in that** the means (318, 320) control the power control in such a manner that the step size depends on the estimated reliability and on the reliability requirement set on the connection.

32. An arrangement as claimed in claim 24 or 25, **characterized in that** the means (318) select the step size from a set of possible step sizes.

**33.** An arrangement as claimed in claim 22 or 23, **characterized in that** the means (318) utilize the soft decisions provided by the decoder for calculating the reliability.

**34.** An arrangement as claimed in claim 22 or 23, **characterized in that** the means (318) utilize the values obtained in CRC calculation for calculating the reliability.

**35.** An arrangement as claimed in claim 22 or 23, **characterized in that** the means (318) search for a step value that optimises the BER outage probability using the reliability estimate.

**36.** An arrangement as claimed in claim 22 or 23, **characterized in that** the means (312) receive frame-structured signal sent from the first transceiver where the information in the consecutive frames is at least partly similar.

**37.** An arrangement as claimed in claim 22 or 23, **characterized in that** the means (318) control the power control in such a manner that the combination of the reliability metrics of consecutive frames should be kept at a desired level.

**38.** An arrangement as claimed in claim 23, **characterized in that** the means (318) calculate at least two reliability metric distributions where different distributions correspond with different signal statistics at the input of the decoder.

**39.** An arrangement as claimed in claim 23, **characterized in that** the means (318) use a non-parametric estimator for generating the reliability measure distribution.

**40.** An arrangement as claimed in claim 23, **characterized in that** the means (318) use a parametric estimator for generating the reliability measure distribution.

**41.** An arrangement as claimed in claim 22 or 23, **characterized in that** the means (318) calculate a reliability estimator in such a manner that it depends on the a posteriori probabilities or likelihood values of the information bits to be obtained from the output of the decoder.

Fig. 1

Fig. 2

EP 1 220 472 A1

Fig. 3

**European Patent Office**

## EUROPEAN SEARCH REPORT

Application Number

EP 01 66 0250

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 041 732 A (NIPPON TELEGRAPH & TELEPHONE) 4 October 2000 (2000-10-04) * column 7, line 47 - column 8, line 28; figure 6 * * column 10, line 17 - column 12, line 13; figures 8A,8B,11,12 * | 1-41 | H04B7/005 |
| X | US 5 732 328 A (MITRA DEBASIS ET AL) 24 March 1998 (1998-03-24) * abstract * * column 5, line 57 - column 6, line 47; figures 2,6,7 * | 1,2,5, 22,23,26 | |
| X,D | SAMPATH A ET AL: "On setting reverse link target SIR in a CDMA system" VEHICULAR TECHNOLOGY CONFERENCE, 1997, IEEE 47TH PHOENIX, AZ, USA 4-7 MAY 1997, NEW YORK, NY, USA,IEEE, US, 4 May 1997 (1997-05-04), pages 929-933, XP010228979 ISBN: 0-7803-3659-3 * page 928, right-hand column, line 14 - page 931, left-hand column, line 2 * | 1,3-22, 24-41 | |
| X | US 6 163 707 A (MILLER JOHN EARLE) 19 December 2000 (2000-12-19) * abstract; figure 1 * * column 2, line 13 - column 3, line 60 * | 1,2,9, 22,23,30 | TECHNICAL FIELDS SEARCHED (Int.Cl.7) H04B |
| X,P | EP 1 146 667 A (MATSUSHITA ELECTRIC IND CO LTD) 17 October 2001 (2001-10-17) * page 3, line 6 - page 4, line 35; figures 2,3 * | 1,2,8,9, 12-14, 22,23, 29,30, 33,34,41 | |

The present search report has been drawn up for all claims

| Place of search | Date of completion of the search | Examiner |
|---|---|---|
| MUNICH | 24 April 2002 | Burghardt, G |

EPO FORM 1503 03.82 (P04C01)

14

EP 1 220 472 A1

**ANNEX TO THE EUROPEAN SEARCH REPORT
ON EUROPEAN PATENT APPLICATION NO.**      EP 01 66 0250

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2002

| Patent document cited in search report | | | Publication date | Patent family member(s) | | Publication date |
|---|---|---|---|---|---|---|
| EP 1041732 | A | 04-10-2000 | EP | 1041732 A2 | 04-10-2000 |
| | | | EP | 1041733 A2 | 04-10-2000 |
| | | | CN | 1123976 A ,B | 05-06-1996 |
| | | | CN | 1264991 A | 30-08-2000 |
| | | | EP | 0709973 A1 | 01-05-1996 |
| | | | JP | 3014308 B2 | 28-02-2000 |
| | | | JP | 8181653 A | 12-07-1996 |
| | | | US | 5873028 A | 16-02-1999 |
| US 5732328 | A | 24-03-1998 | DE | 69800116 D1 | 25-05-2000 |
| | | | DE | 69800116 T2 | 21-12-2000 |
| | | | EP | 0863619 A1 | 09-09-1998 |
| | | | JP | 3242057 B2 | 25-12-2001 |
| | | | JP | 10290196 A | 27-10-1998 |
| | | | KR | 265527 B1 | 15-09-2000 |
| | | | TW | 396684 B | 01-07-2000 |
| | | | CN | 1136242 A | 20-11-1996 |
| | | | EP | 0741467 A2 | 06-11-1996 |
| | | | JP | 8307344 A | 22-11-1996 |
| | | | US | 5956649 A | 21-09-1999 |
| US 6163707 | A | 19-12-2000 | NONE | | |
| EP 1146667 | A | 17-10-2001 | JP | 2001156711 A | 08-06-2001 |
| | | | AU | 1552201 A | 04-06-2001 |
| | | | EP | 1146667 A1 | 17-10-2001 |
| | | | WO | 0139402 A1 | 31-05-2001 |

EPO FORM P0459

For more details about this annex : see Official Journal of the European Patent Office, No. 12/82

15